# EUROPEAN PATENT APPLICATION

(11) **EP 1 918 344 A1**
(43) Date of publication of application: **07.05.2008**
(21) Application number: 07119530.9
(22) Date of filing: 29.10.2007
(51) Int. Cl.: C09J 7/02

(54) **Surface protecting film and optical film with surface protecting film**

(30) Priority: 31.10.2006 JP 2006296122; 04.09.2007 JP 2007229042
(71) Applicant: NITTO DENKO CORPORATION, Ibaraki-shi, Osaka 567-8680 (JP)
(72) Inventor: Yutou, Takumi, Ibaraki-shi Osaka 567-8680 (JP); Takada, Shinichi, Ibaraki-shi Osaka 567-8680 (JP); Yamamoto, Mitsushi, Ibaraki-shi Osaka 567-8680 (JP); Okumura, Kazuhito, Ibaraki-shi Osaka 567-8680 (JP)
(74) Representative: TBK-Patent

(57) **Abstract**

To present a surface protecting film low in peeling strength (rewinding force) on own back side even by using a rubber material pressure-sensitive adhesive, and excellent in adhesion reliance on an adherend, and an optical film using such surface protecting film. A surface protecting film having a pressure-sensitive adhesive layer laminated at one side of a base layer, and a backside treatment layer at other side of the base layer, in which the pressure-sensitive adhesive layer is formed of a rubber material, and the backside treatment layer is formed of an acrylic silicone graft polymer.

## Description

### Field of the Invention

The present invention relates to a surface protecting film and an optical film with a surface protecting film. More particularly, the invention is preferably applied in a thin film to be peeled off easily, a film to be protected from staining, especially a surface protecting film such as optical film (optical sheet) for composing liquid crystal display (LCD), plasma display, organic electroluminescence (EL), and field emission display, and an optical film with a surface protecting film.

### Description of the Related Art

Hitherto, when processing or conveying plastic products or metal plates, the adherend is protected by adhering a surface protecting film temporarily so as to protect the adherend from injury. As such surface protecting film of products, an adhesive film having a pressure-sensitive adhesive layer provided at one side of a base film is used.

So far, a long-chain alkyl compound backside treatment layer is widely used in the tape having a film of low melting point, such as rubber material pressure-sensitive adhesive or polyolefin film. The tape of such composition is very heavy in rewinding force, and very poor in adhering job efficiency (see, for example, patent documents 1: JP-A No. 2000-345123, and patent document 2: JP-A No. 2006-36882). It is hence proposed to use a silicone compound backside treatment layer very high in parting effect (see, for example, patent document 3: JP-A No. 2000-26814). In the existing silicone backside treatment layers, the film is exposed to high temperature when heating and curing, and a film of low melting point may be shrunk in heating and curing process.

The conventional silicone compound backside treatment layer is likely to generate low molecules and cause staining, and has other problems. Another problem is high cost, and the worker is exposed to health problems when using a silicone compound backside treatment layer containing tin derivative catalyst. Further, in the conventional silicone compound backside treatment layer, due to effects of humidity, the parting agent may drop into the pressure-sensitive adhesive layer side.

On the other hand, in the conventional multilayer extrusion film with backside treatment layer, EVA (ethylene/vinyl acetate copolymer) is often used in the backside treatment layer, but the rewinding force is very heavy in this method, and the backside treatment layer may stain the adhesive surface, and adhesion failure may be caused.

So far, therefore, there is no surface protecting film capable of solving the problems of peeling strength and others of rubber material pressure-sensitive adhesive layer.

The invention is devised to solve the problems of the prior art, and it is hence an object thereof to present a surface protecting film low in peeling strength (low in rewinding force) on the own back side if using rubber material pressure-sensitive adhesive, and excellent in adhesion reliance on an adherend, and an optical film having such surface protecting film.

### SUMMARY OF THE INVENITON

The inventors intensively studied to achieve the object, and discovered that the object can be achieved by using the surface protecting film in the following composition, and completed the invention.

That is, the surface protecting film of the invention is a surface protecting film having a pressure-sensitive adhesive layer laminated at one side of a base layer, and a backside treatment layer at other side of the base layer, in which the pressure-sensitive adhesive layer is formed of a rubber material, and the backside treatment layer is formed of an acrylic silicone graft polymer.

The surface protecting film of the invention includes the rubber material pressure-sensitive adhesive layer, and the backside treatment layer formed of the acrylic silicone graft polymer, and in spite of using the rubber material pressure-sensitive adhesive, the peeling strength on the own back side (rewinding force) is low, and the adhesion reliance on an adherend is excellent. In particular, when the protecting film is adhered to an adherend as a roll product, the adhering strength on the own back side in question is very low, and the job efficiency is improved substantially as compared with the prior art.

The surface protecting film of the invention includes surface protecting tape, surface protecting sheet, and other films and sheets.

The acrylic silicone graft polymer of the invention is composed by grafting a silicone skeleton on high molecular chain of acrylic polymer.

The surface protecting film is characterized by the backside treatment layer formed of acrylic silicone graft polymer. The acrylic silicone graft polymer of the invention is smaller in surface tension than the conventional long-chain alkyl parting agent, and the adhering strength on the own back side is smaller, and hence it is expected that a favorable rewinding force is obtained. Since a favorable rewinding force is obtained easily, if a film of low melting point is used, a sufficient adhesion to the film is obtained as compared with the parting agent using the conventional silicone polymer.

By using the acrylic silicone graft polymer, instead of the conventional silicone polymer, line staining can be reduced in the in-line coating process. In the condensation type silicone treating agent used in conventional PO system silicone parting liner, the tin compound catalyst released an offensive odor and was bad for the health of the workers, but the acrylic silicone graft polymer is free from such material odor.

The thickness of the backside treatment layer is preferred to be 0.05 to 0.5 µm. By using such backside treatment layer, more securely it is possible to suppress rewinding force, drop of back side treating layer, and transfer to the pressure-sensitive adhesive layer, and the adhesion reliance is excellent.

The adhesive thickness is preferred to be 2 to 10 µm.

The hydroxy value or acid value of the acrylic silicone graft polymer is preferred to be 15 to 70 mg KOH/g, and the graft amount of the silicone of the acrylic silicone graft polymer is preferred to be 15 to 40 wt.%. By using such acrylic silicone graft polymer, more securely it is possible to suppress rewinding force, drop of back side treating layer, and transfer to the pressure-sensitive adhesive layer, and the adhesion reliance is excellent. The hydroxy value of the invention refers to the amount of end carboxyl group contained in a specific amount of resin, and the hydroxyl group refers to the characteristic value of the resin expressing the amount of the end hydroxyl group contained in a specific amount of resin, and the hydroxy value and acid value mentioned in the following embodiments refer to values measured in accordance with JIS K-0007-1992.

Preferably, the backside treatment layer contains fluorine by 0.3 to 7.0 atomic %. Herein, the atomic % refers to the percentage to the number of atoms. More specifically, it refers to the rate of fluorine in the element contained in the entire backside treatment layer.

Preferably, the surface tension of the backside treatment layer is 13.5 to 18.0 mN/m.

The backside treatment layer may contain a crosslinking agent. By adding a crosslinking agent, adhesion to the film is enhanced, and dropping of backside treatment layer is prevented, and the rewinding force much stabilized, and the rewinding force is sable in a long time course, and therefore it is preferred to add a crosslinking agent to the backside treatment layer.

Preferably, the adhesive strength of the pressure-sensitive adhesive layer on the backside treatment layer when peeling off the surface protecting film at 0.3 m/min is 0.4 N/20 mm or less. By using the surface protecting film of the invention, the own back side adhering strength is suppressed within the specified range, and a favorable adhesion on the adherend is obtained.

The surface protecting film of the invention is preferably used in surface protection of optical film.

The optical film with a surface protecting film of the invention is formed by adhering any one of the surface protecting films mentioned above to one side or both sides of an optical film, especially a prism sheet. The optical film with a surface protecting film of the invention has the surface protecting film known for the excellent actions mentioned above, and although a rubber material pressure-sensitive adhesive is used, peeling force on the own back side (rewinding force) is low, and the adhesion reliance on an adherend is excellent.

### BRIEF DESCRIPTION OF THE DRAWINGS

Fig. 1 is a sectional view of a mode of surface protecting film of the invention; and
Fig. 2 is a sectional view of a mode of state of use of surface protecting film of the invention.

### DETAILED DESCRIPTION OF THE PREFERRED EMBODIMENTS

Preferred embodiments of the invention are specifically described below while referring to the accompanying drawings.

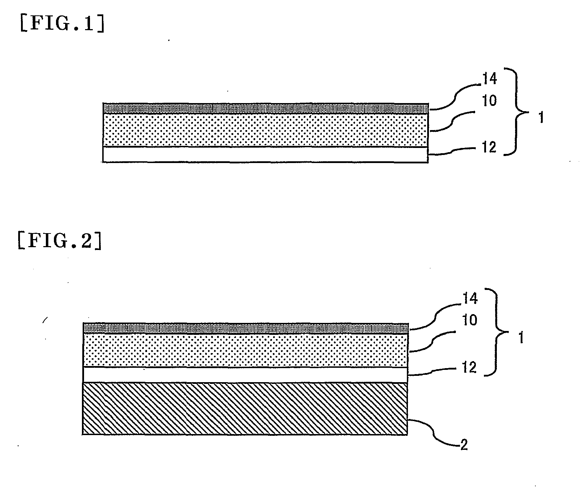

The surface protecting film 1 of the invention is, as shown in Fig. 1, a surface protecting film 1 having a pressure-sensitive adhesive layer 12 laminated to one side of a base layer 10, and a backside treatment layer 14 to the other side of the base layer 10, and the pressure-sensitive adhesive layer 12 is formed of a rubber material, and the backside treatment layer 14 is formed of an acrylic silicone graft polymer.

The base layer 10 of the invention has the pressure-sensitive adhesive layer 12 laminated on one side as shown in Fig. 1. The backside treatment layer 14 is laminated to the other side of the base layer 10.

The base layer 10 is, preferably, a plastic film.

Examples of the plastic film include polyethylene film, polypropylene film, polyester film, polycarbonate film, and polystyrene film. These films may be used either alone or in combination of two or more types as mixed plastic film. The films may be laminated to be formed as plastic film.

The thickness of the base layer 10 is not particularly specified, but is preferred to be 10 to 200 µm, more preferably 15 to 100 µm, particularly preferably 20 to 70 µm. If the thickness is too small, the strength when peeling off the surface protecting film 1 or the surface protecting function may be insufficient. If the thickness is too large, it may be disadvantageous in the aspect of handling or cost.

The base layer 10 may contain deterioration preventive agents, such as antioxidant, ultraviolet absorbent, hindered amine photostabilizer, other photostabilizers, antistatic agent, and also other additives, for example, calcium oxide, magnesium oxide, silica, zinc oxide, titanium oxide, other fillers, pigment, eye-discharge preventive agent, lubricant, anti-blocking agent, foaming agent, polyethylene imine, and others, as appropriate. These compounds may be used either alone or in combination of two or more types as mixture.

The surface of the base layer 10 may be treated appropriately for enhancing the adhesion to the pressure-sensitive adhesive layer 12 or backside treatment layer 14 by, for example, corona discharge process, ultraviolet emission process, flame process, plasma process, and spatter etching process, or for controlling the adherability or improving the adhering job by surface treatment, easy adhesion process, or undercoat process.

The surface protecting film 1 of the invention has the pressure-sensitive adhesive layer 12 formed at one side of the base material 10.

The surface protecting film 1 of the invention has, for example as shown in Fig. 1, the pressure-sensitive adhesive layer 12 formed at one side of the base material 10. The surface protecting film 1 of the invention may be either sheet or tape. The pressure-sensitive adhesive layer 12 may be either a single layer, or a laminate of two or more layers.

The pressure-sensitive adhesive for forming the pressure-sensitive adhesive layer 12 is a rubber material pressure-sensitive adhesive, which may be used without particular limitation. Such rubber material pressure-sensitive adhesive is particularly preferred from the viewpoint of suppression of defects on appearance of prism surface, on the prism surface formed of acrylic resin in prism sheet.

Examples of rubber material pressure-sensitive adhesive include natural rubber, copolymer of natural rubber with methyl methacrylate or other acrylic component, styrene block copolymer and its hydrogen admixture, and styrene-butadiene-styrene block copolymer and its hydrogen admixture. In particular, a copolymer of natural rubber with methyl methacrylate or other acrylic component is preferred. These materials may be used either alone or in combination of two or more types.

By controlling the Mooney viscosity of the pressure-sensitive adhesive agent, the job efficiency and adhesion reliance can be enhanced.

The pressure-sensitive adhesive agent may contain other known additives, for example, crosslinking agent, vulcanizing agent, silane coupling agent, tackifier, coloring agent, pigment, other powder, dyestuff, surface active agent, plasticizer, surface lubricant, leveling agent, softening agent, antioxidant, anti-aging agent, photostabilizer, ultraviolet absorbent, polymerization inhibitor, inorganic or organic filler, metal powder, granules, foils, and others, which may be added appropriately depending on the application. By adding a reducing agent within a controllable range, a redox system may be composed.

The tackifier includes petroleum resin, phenol resin, rosin resin, terpene resin, and others. They may be used either alone or in combination of two or more types.

The blending amount of tackifier is not particularly specified, but is about 1 to 200 parts by weight, preferably 10 to 170 parts by weight in 100 parts by weight of rubber.

The crosslinking agent and vulcanizing agent to be used appropriately include, for example, isocyanate crosslinking agent, thiuram vulcanizing agent, quinoid vulcanizing agent, quinone dioxime vulcanizing agent, maleimide vulcanizing agent, and others. They may be used either alone or in combination of two or more types.

The blending amount of crosslinking agent and vulcanizing agent is not particularly specified, but is about 0.1 to 20 parts by weight, preferably 0.1 to 10 parts by weight in 100 parts by weight of rubber.

The surface of the pressure-sensitive adhesive layer 12 may be treated for easy adhesion by, for example, corona process or plasma process.

The adhesive thickness 12 is preferred to be 2 to 10 µm, more preferably 2 to 9 µm, and most preferably 2 to 6 µm. If the adhesive thickness 12 exceeds 10 µm, the adhesive strength is too high, and it is hard to peel off the surface protecting film 1 after use. If the adhesive thickness 12 is less than 2 µm, the surface is not bonded stably on the prism surface of regular shape, and it may not be adhered.

In the surface protecting film 1 of the invention, as shown in Fig. 1, the backside treatment layer 14 is laminated on other side of the base layer 10 opposite to the pressure-sensitive adhesive layer 12, and the backside treatment layer 14 is formed of acrylic silicone graft polymer.

The parting agent of the backside treatment layer 14 is an acrylic silicone graft polymer.

The acrylic silicone graft polymer of the invention is composed by grafting a silicone skeleton on high molecular chain of acrylic polymer. The acrylic polymer to be used is not particularly specified, and may appropriately include a commercial acrylic polymer for general use. The silicone polymer (silicone skeleton) may be also a commercial silicone polymer as appropriate. They may be used either alone or in combination of two or more types.

The graft amount of silicone skeleton in the acrylic silicone graft polymer is preferred to be 15 to 40 wt.%, more preferably 18 to 38 wt.%, or most preferably 20 to 35 wt.%. If the graft amount is less than 15 wt.%, the adhesion to backing may be too heavy. If the graft amount is more than 40 wt.%, the adhesive strength may be lowered or staining may be caused by transfer of silicone to the pressure-sensitive adhesive layer. The graft amount can be measured by NMR or the like.

The hydroxy value or acid value of the acrylic silicone graft polymer is preferred to be 15 to 70 mg KOH/g, and the graft amount of the silicone of the acrylic silicone graft polymer is preferred to be 15 to 40 wt.%. By using such acrylic silicone graft polymer, more securely it is possible to suppress rewinding force, drop of back side treating layer, and transfer to the pressure-sensitive adhesive layer, and the adhesion reliance is excellent.

The hydroxy value of the invention refers to the amount of end carboxyl group contained in a specific amount of resin, and the hydroxyl group refers to the characteristic value of the resin expressing the amount of the end hydroxyl group contained in a specific amount of resin, and the hydroxy value and acid value mentioned in the following Examples refer to values measured in accordance with JIS K-0007-1992. More specifically, the acid value is the amount of potassium hydroxide in the mg unit necessary for neutralizing the free fatty acid or resin acid contained in 1 mg of the sample. The hydroxy value is the amount of potassium hydroxide in the mg unit necessary for neutralizing the free hydroxyl group contained in 1 mg of the sample. If the hydroxy value or acid value is less than 15, crosslinking of the back side treating agent may be insufficient, and drop or transfer of back side treating agent may occur. On the other hand, if the hydroxy value or acid value is more than 70, lots of carboxyl radicals high in interaction with the pressure-sensitive adhesive agent may be present in the acrylic silicone graft polymer, and the pot life of the back side treating agent may be shorter.

Preferably, the backside treatment layer contains fluorine by 0.3 to 7.0 atomic %, more preferably 0.4 to 4.0 atomic %, and most preferably 0.5 to 2.0 atomic %. The atomic % of fluorine contained is measured by analysis of composition of the surface of the backside treatment layer by using TOF-SIMS.

The surface tension of the backside treatment layer is preferred to be 13.5 to 18.0 mN/m, more preferably 14.0 to 17.0 mN/m, or most preferably 15.0 to 16.0 mN/m. The surface tension of the backside treatment layer was measured in the method shown in the examples.

Preferably the backside treatment layer 14 contains a crosslinking agent. By adding the crosslinking agent, pealing force on the own back side (rewinding force) can be securely lowered, the adhesion reliance to an adherend is excellent, and the job efficiency on the coating side is enhanced.

The crosslinking agent used in the backside treatment layer 14 includes, for example, isocyanate crosslinking agent, epoxy crosslinking agent, metal chelate crosslinking agent, melamine resin, and urea resin. In particular, isocyanate crosslinking agent is preferred.

The amount of crosslinking agent contained in the backside treatment layer 14 is preferably about 3 to 50 parts by weight in 100 parts by weight of acrylic silicone graft polymer, more preferably 5 to 30 parts by weight, or most preferably 10 to 20 parts by weight. When the amount of crosslinking agent exceeds the specified range, the pot life of the back side treating agent becomes shorter. By containing the crosslinking agent within the specified range, it is possible to suppress more securely the excessive increase of the adhesion to backing due to reaction between the crosslinking agent of the pressure-sensitive adhesive layer and the functional group of the backside treatment layer 14.

Preferably, the thickness of the backside treatment layer 14 is preferred to be 0.05 to 0.5 µm, more preferably 0.05 to 0.3 µm, and most preferably 0.6 to 0.15 µm. If the thickness of the backside treatment layer 14 exceeds 0.5 µm, it is too thick, and drop of back side treating layer 14 or transfer to pressure-sensitive adhesive layer may occur. If the thickness of the backside treatment layer 14 is less than 0.05 µm, it is too thin, and the adhesion to backing is too weak, and the rewinding force becomes too large.

Preferably, the adhesive strength of the pressure-sensitive adhesive layer on the backside treatment layer 14 when peeling off the surface protecting film at 0.3 m/min is 0.4 N/20 mm or less, more preferably 0.35 N/20 mm or less, even more preferably 0.3 N/20 mm or less, or most preferably 0.2 N/20 mm or less. By using the surface protecting film of the invention, the own back side adhering strength is suppressed within the specified range, and a favorable adhesion on the adherend is obtained.

The backside treatment layer 14 is formed by coating, transfer, and other known forming method of backside treatment layer 14.

The manufacturing method of surface protecting film 1 having the base layer 10, pressure-sensitive adhesive layer 12, and backside treatment layer 14 is not particularly specified, and includes various methods. Examples of method include a method of melting and co-extruding resin materials for composing layers and forming into a laminate, and a method of forming each layer as film individually by extruding, and adhering these layers by using a pressure-sensitive adhesive agent or the like. In particular, the method by co-extruding or melting and co-extruding is preferable from the viewpoint of excellent adhesion of layers and simplicity in process.

The optical film with a surface protecting film of the invention is formed, as shown in Fig. 2, by adhering the surface protecting film 1 in any one of the examples given above to one side or both sides of the optical film 2, especially prism sheet. The optical film with a surface protecting film of the invention has the surface protecting film 1 having the actions as mentioned above, and in spite of use of rubber material pressure-sensitive adhesive, the peeling strength on the own back side (rewinding force) is low, and the adhesion reliance on the adherend is excellent.

The optical film includes, for example, polarizing plate or polarizer, reflector or transreflector, retardation plate (including half or quarter wavelength plate), viewing angle compensation film, brightness enhancement film, prism sheet or lens sheet, diffusing plate, and other optical layer used in forming of liquid crystal display device.

### [Embodiments]

The configuration and effects of the invention are described below by referring to exemplary embodiments. In the embodiments, the performance items were evaluated as follows.

### (Example 1)

A polypropylene film was used as base layer (support), and a comb-shaped acrylic silicone graft polymer (SYMAC US-270 manufactured by Toagosei Co., Ltd., hydroxy value: 26 mg KOH/g, silicone content: 20 to 30 wt.%) was applied and dried at the outer side of the base layer as backside treatment layer in a coat film thickness of 0.1 µm. As pressure-sensitive adhesive layer, in 100 parts by weight of natural rubber graft copolymer containing 30 wt.% of polymethyl methacrylate (Mooney viscosity: 100, measuring condition: MS (1+4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Example 2)

A polypropylene film was used as base layer (support), and a comb-shaped acrylic silicone graft polymer (SYMAC US-380 manufactured by Toagosei Co., Ltd., acid value: 65 mg KOH/g, silicone content: 20 to 30 wt.%) was applied and dried at the outer side of the base layer as backside treatment layer in a coat film thickness of 0.1 µm. As pressure-sensitive adhesive layer, in 100 parts by weight of natural rubber graft copolymer containing 30 wt.% of polymethyl methacrylate (Mooney viscosity: 100, measuring condition: MS (1+4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Comparative example 1)

A polypropylene film was used as base layer (support), and a long-chain alkyl parting agent (Peeloil 1010 manufactured by Ipposha Oil Industries Co., Ltd.) was applied and dried at the outer side of the base layer as backside treatment layer in a coat film thickness of 0.5 µm. As pressure-sensitive adhesive layer, in 100 parts by weight of natural rubber graft copolymer containing 30 wt.% of polymethyl methacrylate (Mooney viscosity: 100, measuring condition: MS (1 +4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Comparative example 2)

A polypropylene film was used as base layer (support), and a comb-shaped acrylic silicone graft polymer (SG-204 manufactured by Dainippon Ink and Chemicals, Incorporated, acid value: 9.2 mg KOH/g, silicone content: 2 to 4 wt.%) was applied and dried at the outer side of the base layer as backside treatment layer in a coat film thickness of 0.1 µm. As pressure-sensitive adhesive layer, in 100 parts by weight of natural rubber graft copolymer containing 30 wt.% of polymethyl methacrylate (Mooney viscosity: 100, measuring condition: MS (1+4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Example 3)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (Dappo SN-359 manufactured by San Nopco Limited) mixed at a rate of 100:15 was applied and dried at its outer side as parting agent in a coat film thickness of 0.05 µm, and the parting agent with fluorine content of 0.5 atomic % was fabricated. As pressure-sensitive adhesive layer, in 100 parts by weight of natural rubber graft copolymer containing 30 wt.% of polymethyl methacrylate (Mooney viscosity: 100, measuring condition: MS (1+4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Example 4)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (Dappo SN-359 manufactured by San Nopco Limited) mixed at a rate of 100:15 was applied and dried at its outer side as parting agent in a coat film thickness of 0.10 µm, and the parting agent with fluorine content of 1.8 atomic % was fabricated. As pressure-sensitive adhesive layer, in 100 parts by weight of natural rubber graft copolymer containing 30 wt.% of polymethyl methacrylate (Mooney viscosity: 100, measuring condition: MS (1 +4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Example 5)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (Dappo SN-359 manufactured by San Nopco Limited) mixed at a rate of 100:15 was applied and dried at its outer side as parting agent in a coat film thickness of 0.08 µm, and the parting agent with surface tension of 15.80 mN/m was fabricated. As pressure-sensitive adhesive layer, in 100 parts by weight of natural rubber graft copolymer containing 30 wt.% of polymethyl methacrylate (Mooney viscosity: 100, measuring condition: MS (1 +4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Example 6)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (Dappo SN-359 manufactured by San Nopco Limited) mixed at a rate of 100:15 was applied and dried at its outer side as parting agent in a coat film thickness of 0.10 µm, and the parting agent with surface tension of 15.20 mN/m was fabricated. As pressure-sensitive adhesive layer, in 100 parts by weight of natural rubber graft copolymer containing 30 wt.% of polymethyl methacrylate (Mooney viscosity: 100, measuring condition: MS (1 +4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Comparative example 3)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (Dappo SN-367 manufactured by San Nopco Limited) mixed at a rate of 100:15 was applied and dried at its outer side as parting agent in a coat film thickness of 0.10 µm, and the parting agent with fluorine content of 0.1 atomic % was fabricated. As pressure-sensitive adhesive layer, in 100 parts by weight of natural rubber graft copolymer containing 30 wt.% of polymethyl methacrylate (Mooney viscosity: 100, measuring condition: MS (1 +4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Comparative example 4)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (Dappo SN-356 manufactured by San Nopco Limited) mixed at a rate of 100:15 was applied and dried at its outer side as parting agent in a coat film thickness of 0.10 µm, and the parting agent with fluorine content of 9.0 atomic % was fabricated. As pressure-sensitive adhesive layer, in 100 parts by weight of natural rubber graft copolymer containing 30 wt.% of polymethyl methacrylate (Mooney viscosity: 100, measuring condition: MS (1+4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Comparative example 5)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (FA-630 manufactured by Shin-Etsu Silicone) mixed at a rate of 100:10 was applied and dried at its outer side as parting agent in a coat film thickness of 0.10 µm, and the parting agent with fluorine content of 15.0 atomic % was fabricated. As pressure-sensitive adhesive layer, in 100 parts by weight of natural rubber graft copolymer containing 30 wt.% of polymethyl methacrylate (Mooney viscosity: 100, measuring condition: MS (1+4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Comparative example 6)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (FA-630 manufactured by Shin-Etsu Silicone) mixed at a rate of 100:10 was applied and dried at its outer side as parting agent in a coat film thickness of 0.10 µm, and the parting agent with surface tension of 23.6 mN/m was fabricated. As pressure-sensitive adhesive layer, in 100 parts by weight of natural rubber graft copolymer containing 30 wt.% of polymethyl methacrylate (Mooney viscosity: 100, measuring condition: MS (1+4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Comparative example 7)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (Dappo SN-367 manufactured by San Nopco Limited) mixed at a rate of 100:15 was applied and dried at its outer side as parting agent in a coat film thickness of 0.10 µm, and the parting agent with surface tension of 12.8 mN/m was fabricated. As pressure-sensitive adhesive layer, in 100 parts by weight of natural rubber graft copolymer containing 30 wt.% of polymethyl methacrylate (Mooney viscosity: 100, measuring condition: MS (1 +4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

### (Comparative example 8)

A polypropylene film was used as a base, and a mixture of comb-shaped acrylic silicone graft polymer (SYMAC US-270 manufactured by Toagosei Co., Ltd., hydroxy value: 26 mg KOH/g, silicone content: 20 to 30 wt.%) and fluorosilicone defoaming agent (Dappo SN-359 manufactured by San Nopco Limited) mixed at a rate of 100:15 was applied and dried at its outer side as parting agent in a coat film thickness of 0.10 µm, and the parting agent with surface tension of 19.1 mN/m was fabricated. As pressure-sensitive adhesive layer, in 100 parts by weight of natural rubber graft copolymer containing 30 wt.% of polymethyl methacrylate (Mooney viscosity: 100, measuring condition: MS (1+4) 100 deg. C), an adhesive resin (Quintone A-100 manufactured by Zeon Corporation) was added by 30 parts by weight, and the mixture was dissolved in a diluting solvent, and applied and dried, and a layer of 3 µm in thickness was formed, and a surface protecting film was obtained.

The surface protecting films obtained in the examples and Comparative examples were evaluated in the following items. Results are shown in table 1 to table 3.

### (Measurement of hydroxy value and acid value)

The hydroxy value and acid value were measured according to JIS K-0070-1966. In measurement, potassium hydroxide was dissolved in ethanol.

### (Measurement of adhesion to backing)

On an acrylic plate (Acrylite-L manufactured by Mitsubishi Rayon Co., Ltd.), and a two-side adhesive tape of glue thickness of 25+/-3 µm using PET parting liner was adhered without base, and the protecting film to be measured was adhered with the tape back side up, and the same protecting film was adhered to the back side. This sample was compressed at line pressure of 78 N/cm and speed of 0.3 m/min, and cut in a width of 20 mm, and the tape was opened at a peeling angle of 180 degrees at speed of 0.3 m/min and 10 m/min, and the resisting strength (adhesive strength) at that time was measured.

### (Measurement of fluorine content)

The fluorine content was measured by composition analysis of the surface of the backside treatment layer by using TOF-SIMS.

### (Measurement of surface tension)

The surface tension of backside treatment layer was measured in the following procedure.

A tape or film coated with backside treatment layer was placed on a slide glass spread with several drops of water, with the backside treatment layer up, and fixed to the slide glass. Using a contact angle meter (model CX-A manufactured by Kyowa Interface Science Co., Ltd.), the contact angle of distilled water, methylene iodide, and ethylene glycol was measured in 5 samples. From the average value of the data excluding upper and lower limit values, the surface tension was calculated according to the formula of Fowkes.

### (Observation condition of uneven coating on back side)

The parting agent was applied to a plastic film by kissing method at coating speed of 85 m/min in the atmosphere of 32 deg. C and 60% RH, and dried at 80 deg. C, and the coating state was visually observed under fluorescent lamp, and uneven coating was evaluated.

**Table 1**

| | | Example 1 | Example 2 | Comparative Example 1 | Comparative Example 2 |
|---|---|---|---|---|---|
| Silicone content (%) | | 20~30 | 20~30 | 0 | 2~4 |
| Hydroxy value or acid value (mgKOH/g) | | 27.0 | 65.0 | 0 | 9.2 |
| Thickness of backside treatment layer (µm) | | 0.10 | 0.10 | 0.10 | 0.10 |
| Adhesion to backing (N/20mm) | 0.3m/min | 0.12 | 0.19 | 0.58 | 0.79 |
| | 10m/min | 0.06 | 0.09 | 1.50 | 0.70 |

As shown from table 1, the surface protecting films manufactured in examples 1 and 2 were low in peeling strength (rewinding force) from the own back side even if rubber material pressure-sensitive adhesive was used, and was excellent in adhesion reliance on an adherend.

**Table 2**

| | Example 3 | Example 4 | Comparative Example 3 | Comparative Example 4 | Comparative Example 5 |
|---|---|---|---|---|---|
| Silicone content (%) | 20~30 | 20~30 | 20~30 | 20~30 | 20~30 |
| Hydroxy value or acid value (mgKOH/g) | 27.0 | 27.0 | 27.0 | 27.0 | 27.0 |
| Thickness of backside treatment layer (µm) | 0.05 | 0.10 | 0.10 | 0.10 | 0.10 |
| Fluorine content of backside treatment layer (atomic%) | 0.50 | 1.80 | 0.10 | 9.00 | 15.00 |
| Uneven coat on own back side | o | o | × | × | × |

**Table 3**

| | Example 5 | Example 6 | Comparative Example 6 | Comparative Example 7 | Comparative Example 8 |
|---|---|---|---|---|---|
| Silicone content (%) | 20~30 | 20~30 | 20~30 | 20~30 | 20~30 |
| Hydroxy value or acid value (mgKOH/g) | 27.0 | 27.0 | 27.0 | 27.0 | 27.0 |
| Thickness of backside treatment layer (µm) | 0.08 | 0.10 | 0.10 | 0.10 | 0.10 |
| Surface tension (mN/m) | 15.80 | 15.20 | 23.60 | 12.80 | 19.10 |
| Uneven coat on own back side | o | o | × | × | × |

To present a surface protecting film low in peeling strength (rewinding force) on own back side even by using a rubber material pressure-sensitive adhesive, and excellent in adhesion reliance on an adherend, and an optical film using such surface protecting film. A surface protecting film having a pressure-sensitive adhesive layer laminated at one side of a base layer, and a backside treatment layer at other side of the base layer, in which the pressure-sensitive adhesive layer is formed of a rubber material, and the backside treatment layer is formed of an acrylic silicone graft polymer.

## Claims

1. A surface protecting film having a pressure-sensitive adhesive layer laminated at one side of a base layer, and a backside treatment layer at other side of the base layer, wherein the pressure-sensitive adhesive layer is formed of a rubber material, and the backside treatment layer is formed of an acrylic silicone graft polymer.

2. The surface protecting film according to claim 1, wherein the thickness of the backside treatment layer is 0.05 to 0.5 µm.

3. The surface protecting film according to claim 1 or 2, wherein the adhesive thickness is 2 to 10 µm.

4. The surface protecting film according to any one of claims 1 to 3, wherein the hydroxy value or acid value of the acrylic silicone graft polymer is 15 to 70 mg KOH/g, and the graft amount of the silicone of the acrylic silicone graft polymer is 15 to 40 wt.%.

5. The surface protecting film according to any one of claims 1 to 4, wherein the backside treatment layer contains fluorine by 0.3 to 7.0 atomic %.

6. The surface protecting film according to any one of claims 1 to 5, wherein the surface tension of the backside treatment layer is 13.5 to 18.0 mN/m.

7. The surface protecting film according to any one of claims 1 to 6, wherein the adhesive strength of the pressure-sensitive adhesive layer on the backside treatment layer when peeling off at 0.3 m/min is 0.4 N/20 mm or less.

8. The surface protecting film according to any one of claims 1 to 7, wherein it is used in surface protection of an optical film.

9. An optical film with a surface protecting film having the surface protecting film according to any one of claims 1 to 7 adhered to one side or both sides of an optical film.
